# EUROPÄISCHE PATENTANMELDUNG

(11) **EP 1 577 603 A1**
(43) Veröffentlichungstag der Anmeldung: **21.09.2005**
(21) Anmeldenummer: 04029515.6
(22) Anmeldetag: 14.12.2004
(51) Int. Cl.: F16N 3/12, F16N 5/02

(54) **Handgerät zum Verpressen viskoser Massen**

(30) Priorität: 08.03.2004 DE 202004003681 U
(71) Anmelder: FUCHS LUBRITECH GMBH, 67685 Weilerbach (DE)
(72) Erfinder: Schumann, Axel, 67731 Otterbach (DE)
(74) Vertreter: KEIL & SCHAAFHAUSEN Patentanwälte

(57) **Zusammenfassung**

Die Erfindung bezieht sich auf ein Handgerät zum Verpressen viskoser Massen, insbesondere von Schmierfetten, mit einem vorderen Hochdruckpumpenteil (2) und einem hinteren Druckluftpressenteil (3), wobei der Hochdruckpumpenteil (2) einen Hochdruckauslass (4) für die viskose Masse und einen Saugeinlass (5) aufweist, über welchen die viskose Masse mittels einer Pumpe des Hochdruckpumpenteils ansaugbar und dem Hochdruckauslass (4) unter erhöhtem Druck zuführbar ist, und wobei der Druckluftpressenteil (3) einen Druckluftanschluss (6) und einen Auslösehebel (7) für die Druckluftzufuhr zur Betätigung der Pumpe aufweist.

## Beschreibung

Die Erfindung bezieht sich auf ein Handgerät zum Verpressen viskoser Massen, insbesondere von Schmierfetten.

Derartige Handgeräte sind bisher als Handhebelpressen ausgebildet, an dem ein feststehender und ein gegen die Wirkung einer Rückstellfeder beweglicher Handhebel vorgesehen sind, welche nach Art eines Pistolengriffs zusammenwirken. An einen Anschlussstutzen ist ein Vorratsbehälter für die viskose Masse anschließbar. Ein Kolben ist unter der Wirkung des Handhebels längs verschiebbar. Wenn der Handhebel in seine Ausgangsstellung zurückkehrt, führt der Kolben einen Ansaughub durch. Dabei strömt über eine Niederdruck-Ansaugöffnung das viskose Material aus dem Vorratsbehälter in dem Raum vor dem Kolben. Am vorderen Ende des Pumpenraums ist wenigstens eine Hochdruck-Auslassöffnung vorgesehen, über welche unter Zwischenschaltung eines Rückschlagventils die zu verpressende viskose Masse an dem vorderen Ende eines Düsenrohrs abgegeben werden kann (vgl. z.B. DE 86 16 361 U1). Da derartige Handhebelpressen gegen die Wirkung einer Rückstellfeder von Hand betätigt werden müssen, ist ihr Einsatz, insbesondere wenn eine große Zahl von Schmierstellen in rascher Folge hintereinander versorgt werden soll, unbequem.

Aufgabe der vorliegenden Erfindung ist es, ein Handgerät der zuvor geschilderten Art so abzuändern und weiter zu bilden, dass eine praktischere Einhandbedienung ermöglicht ist.

Diese Aufgabe wird bei einem Handgerät zum Verpressen viskoser Massen, insbesondere von Schmierfetten, bspw. gelöst mit einem vorderen Hochdruckpumpenteil und einem hinteren Druckluftpressenteil, wobei der Hochdruckpumpenteil einen Hochdruckauslass für die viskose Masse und einen Saugeinlass aufweist, über welchen die viskose Masse mittels einer Pumpe des Hochdruckpumpenteils ansaugbar und dem Hochdruckauslass unter erhöhtem Druck zuführbar ist, und wobei der Druckluftpressenteil einen Druckluftanschluss und einen Auslösehebel für die Druckluftzufuhr zur Betätigung der Pumpe aufweist. Ein derartiges Handgerät eignet sich für eine praktische Einhandbedienung und ist insbesondere von Vorteil für das Abschmieren von Maschinen, Nutzfahrzeugen, Baumaschinen und dgl., wo eine Vielzahl von Schmierstellen versorgt werden muss.

Dem Hochdruckauslass kann vorteilhafterweise ein Anschlussstutzen für einen Hochdruckschlauch zugeordnet sein, so dass auch schwieriger zugängliche Schmierstellen bequem versorgt werden können.

Der Saugeinlass ist vorteilhafterweise für den luftdichten Anschluss eines z.B. als Kartusche ausgebildeten Massevorratsbehälters ausgebildet, damit zuverlässig Dichtigkeit erzielt werden kann.

Hierbei ist dem Saugeinlass bspw. als Einlassstutzen ausgebildet, in welchen das Vorderteil des Vorratsbehälters luftdicht einpassbar ist.

Dies kann bspw. dadurch auf einfache Weise erreicht werden, dass der Einlassstutzen einen mit Innengewinde versehenen zylindrischen Abschnitt und/oder einen sich (daran anschließenden) Konusabschnitt für die Aufnahme bzw. Anlage des entsprechend ausgebildeten Vorderteils des Vorratsbehälters aufweist.

Eine besonders einfache Handhabung des Handgerätes wird dadurch erzielt, wenn der Druckluftpressenteil einen pistolengriffartigen Handgriff aufweist.

Dabei kann der Druckluftanschluss vorteilhafterweise an dem freien Ende des Handgriffs vorgesehen sein, so dass die Druckluftzuführung bei der Handhabung des Handgerätes wenig stört.

An dem Handgriff kann ferner ein Anschlag für den Auslösehebel vorgesehen sein, um dessen Auslöseweg bei Betätigung des Handgeräts zu begrenzen.

Aus Handhabungsgründen sowie zur Erhöhung der Stabilität ist bei einer weiteren Ausgestaltung der Erfindung das freie Ende des Handgriffs über eine Bügel unter Freihaltung eines Handeingriffsschlitzes mit dem Gehäuse des Druckluftpressenteils verbunden.

Zur Erleichterung der Verbindung des insbesondere als Kartusche ausgebildeten Vorratsbehälters mit dem Hochdruckpumpenteil kann an diesem einen z.B. einen Führungsring aufweisende Halterung für den Vorratsbehälter vorgesehen sein.

Ein für die Praxis besonders geeignetes Handgerät der erfindungsgemäßen Art zeichnet sich dadurch aus, dass es zur Abgabe von etwa 0,5 bis 2 cm³ Masse pro Pumpenhub gegen 250 bar und/oder auf einen Eingangsdruck zwischen etwa 2 und 10 bar und/oder ein Druckübersetzungsverhältnis zwischen 1 : 20 bis 1 : 40, vorzugsweise von etwa 1 : 30 ausgelegt ist.

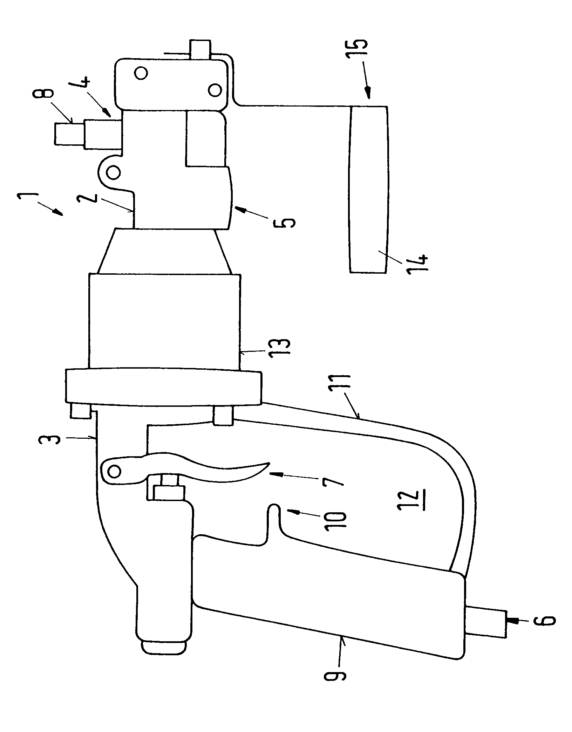

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in einzelnen Ansprüchen oder deren Rückbeziehung.

Es zeigt die einzige Figur schematisch in Seitenansicht ein die Erfindung aufweisendes Handgerät zum Verpressen viskoser Massen, insbesondere von Schmierfetten.

Das Handgerät 1 hat einen vorderen Hochdruckpumpenteil 2 mit einer darin angeordneten Pumpe und einen hinteren Druckluftpressenteil 3. Der Hochdruckpumpenteil 2 weist auf seiner Oberseite einen Hochdruckauslass 4 für die viskose Masse und auf seiner Unterseite einen Saugeinlass 5, über welchen die zu verpressende viskose Masse mittels der Pumpe ansaugbar und dem Hochdruckauslass 4 unter erhöhtem Druck zuführbar ist.

Dem Hochdruckauslass 4 ist ein Anschlussstutzen 8 für einen Hochdruckschlauch zugeordnet. Der Saugeinlass 5 ist für den luftdichten Anschluss eines z.B. als Kartusche ausgebildeten Massevorratsbehälters ausgebildet. Dabei kann dem Saugeinlass 5 ein nicht sichtbarer Einlassstutzen zugeordnet sein, in welchem das Vorderteil des Vorratsbehälters luftdicht einpassbar ist. Dies kann bspw. dadurch geschehen, dass der Einlassstutzen einen mit Innengewinde versehenen zylindrischen Abschnitt und/oder einen sich (daran anschließenden) Konusabschnitt für die Aufnahme bzw. Anlage des entsprechend ausgebildeten Vorderteils des Massevorratsbehälters aufweist.

Der Druckluftpressenteil 3 hat einen pistolengriffartigen Handgriff 9, an dessen freiem Ende ein Druckluftanschluss 6 vorgesehen ist. Der Handgriff 9 weist einen Anschlag 10 für den an dem Gehäuse 13 des Druckluftpressenteils 3 angelenkten Auslösehebel 7 auf, um dessen Auslenkweg zu begrenzen. Das freie Ende des Handgriffs 9 ist über einen Bügel 11 unter Freihaltung eines Handeingriffsschlitzes 12 mit dem Gehäuse 13 des Druckluftpressenteils 3 verbunden.

An dem Handdruckpumpenteil 2 ist eine einen Führungsring 14 aufweisende Halterung 15 für einen (nicht dargestellten) als Kartusche ausgebildeten Massevorratsbehälter vorgesehen.

### Bezugszeichenliste

- 1: Handgerät
- 2: Hochdruckpumpenteil
- 3: Druckluftpressenteil
- 4: Hochdruckauslass
- 5: Saugeinlass
- 6: Druckluftanschluss
- 7: Auslösehebel
- 8: Anschlussstutzen
- 9: Handgriff
- 10: Anschlag
- 11: Bügel
- 12: Handeingriffsschlitz
- 13: Gehäuse des Druckluftpressenteils
- 14: Führungsring
- 15: Halterung

## Patentansprüche

1. Handgerät zum Verpressen viskoser Massen, insbesondere von Schmierfetten, mit einem vorderen Hochdruckpumpenteil (2) und einem hinteren Druckluftpressenteil (3), wobei der Hochdruckpumpenteil (2) einen Hochdruckauslass (4) für die viskose Masse und einen Saugeinlass (5) aufweist, über welchen die viskose Masse mittels einer Pumpe des Hochdruckpumpenteils ansaugbar und dem Hochdruckauslass (4) unter erhöhtem Druck zuführbar ist, und wobei der Druckluftpressenteil (3) einen Druckluftanschluss (6) und einen Auslösehebel (7) für die Druckluftzufuhr zur Betätigung der Pumpe aufweist.

2. Handgerät nach Anspruch 1, **dadurch gekennzeichnet, dass** dem Hochdruckauslass (4) ein Anschlussstutzen (8) für einen Hochdruckschlauch zugeordnet ist.

3. Handgerät nach Anspruch 1 oder 2, **dadurch gekennzeichnet, dass** der Saugeinlass (5) für den luftdichten Anschluss eines z.B. als Kartusche ausgebildeten Massevorratsbehälters ausgebildet ist.

4. Handgerät nach einem der vorhergehenden Ansprüche, **dadurch gekennzeichnet, dass** der Saugeinlass (5) als Einlassstutzen ausgebildet ist, in welchen das Vorderteil des Vorratsbehälters luftdicht einpassbar ist.

5. Handgerät nach Anspruch 4, **dadurch gekennzeichnet, dass** der Einlassstutzen einen mit Innengewinde versehenen zylindrischen Abschnitt und/oder einen sich (daran anschließenden) Konusabschnitt für die Aufnahme bzw. Anlage des entsprechend ausgebildeten Vorderteils des Vorratsbehälters aufweist.

6. Handgerät nach einem der vorhergehenden Ansprüche, **dadurch gekennzeichnet, dass** der Druckluftpressenteil (3) einen pistolengriffartigen Handgriff (9) aufweist.

7. Handgerät nach einem der vorhergehenden Ansprüche, **dadurch gekennzeichnet, dass** der Druckluftanschluss (6) an dem freien Ende des Handgriffs (9) vorgesehen ist.

8. Handgerät nach einem der vorhergehenden Ansprüche, **dadurch gekennzeichnet, dass** der Handgriff (9) einen Anschlag (10) für den Auslösehebel (7) aufweist.

9. Handgerät nach einem der vorhergehenden Ansprüche, **dadurch gekennzeichnet, dass** das freie Ende des Handgriffs (9) über einen Bügel (11) unter Freihaltung eines Handeingriffschlitzes (12) mit dem Gehäuse (13) des Druckluftpressenteils (3) verbunden ist.

10. Handgerät nach einem der vorhergehenden Ansprüche, **dadurch gekennzeichnet, dass** an dem Hochdruckpumpenteil (2) eine z.B. einen Führungsring (14) aufweisende Halterung (15) für den insbesondere als Kartusche ausgebildeten Vorratsbehälter vorgesehen ist.

11. Handgerät nach einem der vorhergehenden Ansprüche, **dadurch gekennzeichnet, dass** es zur Abgabe von etwa 0,5 bis 2,0 cm³ Masse pro Pumpenhub gegen 250 bar ausgebildet ist.

12. Handgerät nach einem der vorhergehenden Ansprüche, **dadurch gekennzeichnet, dass** es auf einen Eingangsdruck zwischen etwa 2 und 10 bar ausgelegt ist.

13. Handgerät nach einem der vorhergehenden Ansprüche, **dadurch gekennzeichnet, dass** es auf ein Druckübersetzungsverhältnis zwischen 1 : 20 bis 1 : 40, vorzugsweise von etwa 1 : 30 ausgelegt ist.
